(19) **Europäisches Patentamt**
**European Patent Office**
**Office européen des brevets**

(11) **EP 1 289 811 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **01951533.7**

(22) Anmeldetag: **30.05.2001**

(51) Int Cl.:
***B60T 8/00*** *(2006.01)*

(86) Internationale Anmeldenummer:
**PCT/EP2001/006138**

(87) Internationale Veröffentlichungsnummer:
**WO 2001/092076 (06.12.2001 Gazette 2001/49)**

(54) **VERFAHREN UND VORRICHTUNG ZUR WIRKUNGSÜBERWACHUNG VON FAHRZEUGBREMSANLAGEN**

METHOD AND DEVICE FOR MONITORING THE EFFECTIVENESS OF VEHICLE BRAKING SYSTEMS

PROCEDE ET DISPOSITIF POUR SURVEILLER L'EFFICACITE DES SYSTEMES DE FREINAGE DE VEHICULES

(84) Benannte Vertragsstaaten:
**AT BE CH CY DE DK ES FI FR GB GR IE IT LI LU MC NL PT SE TR**

(30) Priorität: **30.05.2000 DE 10026687**

(43) Veröffentlichungstag der Anmeldung:
**12.03.2003 Patentblatt 2003/11**

(73) Patentinhaber: **KNORR-BREMSE Systeme für Schienenfahrzeuge GmbH 80809 München (DE)**

(72) Erfinder:
• **MAYER, Reinhold 85757 Karlsfeld (DE)**
• **SCHMID, Ralf 85591 Vaterstetten (DE)**

(56) Entgegenhaltungen:
**DE-A- 3 827 363          DE-A- 19 510 755 DE-A- 19 848 994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 289 811 B1

**Beschreibung**

Die vorliegende Erfindung betrifft ein Verfahren und eine Vorrichtung zur Wirkungsüberwachung von Bremsanlagen von Fahrzeugen, insbesondere von Schienenfahrzeugen.

Bremssteuerungen sollen eine vom Fahrer vorgegebene Bremsanforderung in eine Fahrzeugverzögerung umsetzen. Die Überwachung, ob aus der Bremsanforderung die gewünschte Fahrzeugverzögerung resultiert, bleibt üblicherweise dem Fahrer überlassen. Bei Schienenfahrzeugen hat der Zugführer insbesondere die Aufgabe, Gefahrensituationen, wie z.B. ein fehlerhaftes Ansprechen der Bremsanlage bzw. einen Ausfall der Bremsanlage, zu erkennen und eine Sicherheitsbremsung einzuleiten. Zur Vermeidung von Unfällen ist vor allem das rechtzeitige Erkennen von Störungen und eine sofortige Notbremsung erforderlich.

Aufgabe der Erfindung ist ein aus DE 19 510 755 bekanntes Verfahren bzw. eine Vorrichtung zur Wirkungsüberwachung von Fahrzeugbremsanlagen weiter zu verbessern.

Diese Aufgabe wird durch die Patentansprüche 1 und 10 gelöst. Vorteilhafte Ausgestaltungen und Weiterbildungen der Erfindung sind den Unteransprüchen zu entnehmen.

Der Erfindung liegt die Idee zugrunde, eine Bremsanforderung des Fahrers mit der sich einstellenden Fahrzeugreaktion zu vergleichen und durch sequentielle Überprüfung mehrerer Ansprechkriterien ggf. auftretende Störungen zu erkennen und eine Not- bzw. Sicherheitsbremsung einzuleiten.

Wenn eine Bremsanforderung von der Bremsanlage nicht in die geforderte Fahrzeugverzögerung umgesetzt wird, dann leitet eine Überwachungseinrichtung automatisch eine Notbremsung ein. Hierbei werden vorhandene Betriebs- bzw. Umgebungsbedingungen des Fahrzeugs, wie z.B. Streckenneigung, Haftwert zwischen Rad und Schiene etc., berücksichtigt, so daß die vom Fahrer geforderte Fahrzeugverzögerung bzw. die durch die physikalischen Randbedingungen maximal mögliche Fahrzeugverzögerungen erreicht wird.

Der "automatische Bremseingriff" kann sowohl über "Signalpfade" erfolgen, die bei herkömmlichen Schienenfahrzeugen vom Fahrer zu aktivieren sind, als auch durch zusätzliche Eingriffsmöglichkeiten, wie z.B. durch Abschalten von bremskraftbegrenzenden bzw. bremskraftreduzierenden Systemen. Mit anderen Worten schlägt die Erfindung vor, anstatt des bisher bei Schienenfahrzeugen üblichen vom Fahrer zu betätigenden Notschlagknopfes einen "intelligenten Notschlagknopf" vorzusehen, der im Notfall automatisch auslöst, und ggf. zusätzlich das Gleitschutzsystem abzuschalten.

Die Erfindung ermöglicht somit eine schnellstmögliche Einleitung von Sicherheitsbremsungen bei erkennbaren Störungen im Bremssystem. Dies entlastet den Fahrer und erhöht die Sicherheit ganz wesentlich. Vorteilhaft ist auch, daß fehlerhafte Teilsysteme der Bremsanlage, wie z.B. das Gteitschutzsystem, automatisch abgeschaltet werden können. Die aktuell verfügbare Bremskraft kann somit optimal ausgenützt werden, d.h. es kann verhindert werden, daß der Fahrer das Fahrzeug irrtümlich mit einem geringeren als dem physikalisch übertragbaren Bremskraftniveau verzögert.

Im folgenden wird die Erfindung anhand eines Ausführungsbeispiels im Zusammenhang mit der Zeichnung näher erläutert.

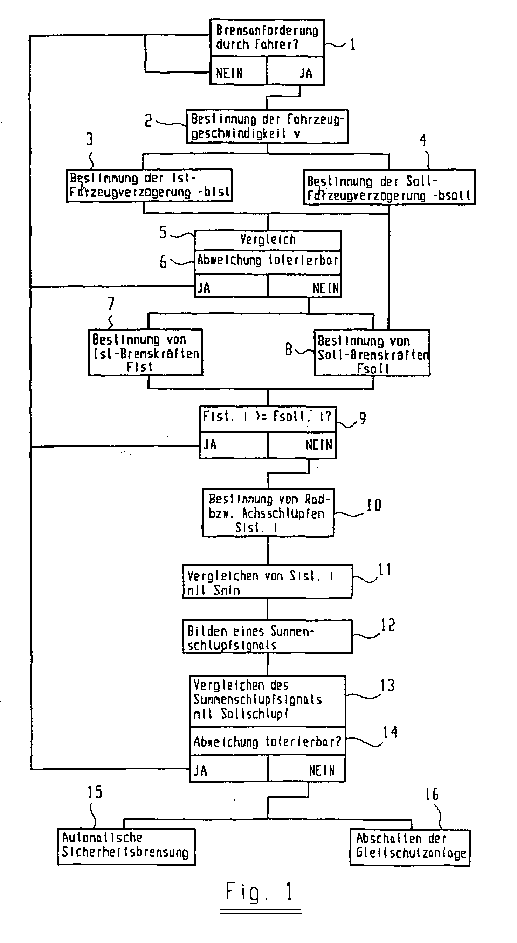

Die einzige Fig. 1 zeigt die gemäß der Erfindung durchzuführenden Verfahrensschritte, die in der Praxis von einer elektronischen Steuerungsvorrichtung bzw. von einem Mikrocomputer ausgeführt werden.

Bei diesem Verfahren werden folgende Größen als Eingangsgrößen verwendet:

| | |
|---|---|
| $v$: | Geschwindigkeit des Fahrzeugs über Grund |
| $-b_{soll}$: | die der Bremsanforderung des Fahrers entsprechende Soll-Verzögerung des Fahrzeugs |
| $v_i$: | Radgeschwindigkeiten |
| $F_i$: | Bremskräfte an Rädern bzw. Achsen. |

Bei Detektieren einer Störung im Bremssystem können folgende Ausgangssignale erzeugt werden:

- ein Signal zur automatischen Einleitung einer Sicherheitsbremsung und/oder

- ein Signal zum Abschalten der Gleitschutzanlage.

In Schritt 1 wird festgestellt, ob eine Bremsanforderung des Fahrers vorliegt, wobei Schritt 1 ständig wiederholt wird, wenn keine Bremsanforderung vorliegt. Liegt eine Bremsanforderung vor, so wird in Schritt 2 die Fahrzeuggeschwindigkeit bestimmt und zwar unabhängig von der Funktion der Bremsanlage. Die Bestimmung der Fahrzeuggeschwindigkeit $v$ erfolgt dabei durch eine separate Meßeinrichtung, die eigens für die Wirkungsüberwachung der Bremsanlage vorgesehen ist. Dies kann beispielsweise durch ein Radargeschwindigkeitsmeßsystem erfolgen oder durch die separate Sensierung der Geschwindigkeit einer ungebremsten Achse. Die Fahrzeuggeschwindigkeit kann auch in bekannter Weise durch Auswertung von Raddrehzahlsignalen bestimmt werden, wobei hier ein Auswertealgorithmus zu verwenden ist, der unabhängig vom Algorithmus zur Ermittlung einer Referenzgeschwindigkeit für normale Betriebsbremsungen durch das Bremssteuergerät arbeitet.

Aus der Fahrzeuggeschwindigkeit $v$ wird in Schritt 3 in bekannter Weise die Ist-Fahrzeugverzögerung $-b_{ist}$ berechnet. In Schritt 4 wird aus der vom Fahrer vorgegebenen Bremsanforderung eine Soll-Fahrzeugverzögerung $-b_{soll}$ ermittelt.

In Schritt 5 werden die Soll-Verzögerung und die Ist-Verzögerung miteinander verglichen, und in Schritt 6 wird entschieden, ob die Abweichung zwischen Soll-Wert und IstWert tolerierbar ist. Beim Vergleich der Soll-Verzögerung mit der Ist-Verzögerung werden Umgebungsparameter, wie z.B. die Steigung der Fahrstrekke, berücksichtigt. Dabei wird z.B. überprüft, ob folgende Beziehung erfüllt ist:

$$|-b_{ist}| \geq |-b_{soll}| - g^* \tan_\alpha,$$

wobei g der Ortsfaktor der Erdbeschleunigung und $\alpha$ der Neigungs- bzw. Steigungswinkel der Fahrstrecke ist. Wird die Abweichung zwischen der Ist-Fahrzeugverzögerung und der Soll-Fahrzeugverzögerung als tolerierbar angesehen, so wird zu Schritt 1 zurückgesprungen. Andernfalls werden in Schritt 7 Bremskräfte $F_{ist,i}$ an einzelnen Rädern bzw. Achsen ermittelt. Bei der Bremskraftüberwachung wird geprüft, ob die Bremskräfte an den einzelnen Rädern bzw. Achsen den Werten entsprechen, die zum Erreichen der geforderten Fahrzeugverzögerung $-b_{soll}$ notwendig sind. Die zum Erreichen der geforderten Fahrzeugverzögerung erforderlichen Bremskräfte $F_{soll}$ werden in Schritt 8 als Funktion der in Schritt 4 bestimmten geforderten Fahrzeugverzögerung $-b_{soll}$ ermittelt.

In Schritt 9 wird geprüft, ob die Ist-Bremskräfte größer als die Soll-Bremskräfte sind, d.h. ob gilt:

$$F_{ist,i} \geq F(-b_{soll})_{soll,i}.$$

Die Bremskräfte an den einzelnen Rädern bzw. Achsen können durch Messung, z.B. durch Bremsdruckmessung, ermittelt werden oder auf der Basis der Bremszylinderdrücke oder anderer bekannter Größen der Bremsanlage geschätzt werden. Ist die Bremskraft ausreichend, so wird zu Schritt 1 zurückgesprungen. Ist die Bremskraft hingegen zu gering, dann wird eine Schlupfüberwachung durchgeführt. Hierzu werden in Schritt 10 zunächst der Radschlupf $s_{ist,i}$ an einzelnen Rädern bzw. Achsen nach folgender Formel bestimmt:

$$s_{ist,i} = 1 - \frac{v_i}{v}.$$

Bei der Schlupfbestimmung werden gegebenenfalls Besonderheiten des zugrundeliegenden Bremssystems berücksichtigt. So kann es z.B. bei einer Gleitschutzregelung je Drehgestell ausreichend sein, wenn eine Achse im Drehgestell einen vorgegebenen Mindestschlupf erreicht.

In Schritt 11 werden die Schlupfsignale $s_i$ mit dem Mindestschlupf $s_{min}$ verglichen, d.h. es wird überprüft, ob

$$1 - \frac{v_i}{v} > s_{min}.$$

Die Überprüfung wird für jedes Rad bzw. jede Achse mit einem Zeitkriterium verknüpft. In Schritt 12 werden die Ergebnisse für die einzelnen Räder bzw. Achsen zu einer Summenaussage, d.h. zu einem Summenschlupfsignal, zusammengefaßt. In Schritt 13 wird das Summenschlupfsignal mit einem vorgegebenen Soll-Schlupf verglichen. Wird der Soll-Schlupf erreicht, so wird in Schritt 14 zu Schritt 1 zurückgesprungen. Liegt hingegen eine Abweichung vor, die nicht tolerierbar ist, so wird in Schritt 15 eine automatische Sicherheitsbremsung eingeleitet und/oder in Schritt 16 die Gleitschutzanlage ganz oder teilweise abgeschaltet.

**Patentansprüche**

1. Verfahren zur Wirkungsüberwachung von Bremsanlagen von Fahrzeugen, insbesondere von Schienenfahrzeugen, bei dem bei einer Bremsanforderung durch den Fahrer folgende Schritte durchgeführt werden:

   a) Bestimmen der Fahrzeuggeschwindigkeit (v);
   b) Ermitteln der Ist-Verzögerung ($-b_{ist}$) des Fahrzeugs aus der Fahrzeuggeschwindigkeit (v);
   c) Vergleichen der Ist-Verzögerung ($-b_{ist}$) mit einer vom Fahrer geforderten Soll-Verzögerung ($-b_{soll}$); **gekennzeichnet durch** die weiteren Schritte :
   d) Bestimmen von Ist-Bremskräften ($F_{ist}$) an einzelnen Rädern bzw. Achsen und Vergleichen der Ist-Bremskräfte ($F_{ist}$) mit Soll-Brerriskräften ($F_{soll}$), die zur Erreichung der Soll-Verzögerung ($-b_{soll}$) erforderlich sind, wenn eine Abweichung zwischen der Soll-Verzögerung ($-b_{soll}$) und der Ist-Verzögerung ($-b_{ist}$) einen vorgegebenen Toleranzwert übersteigt;
   e) Ermitteln von Ist-Schlupfwerten ($S_{ist,i}$) an einzelnen Rädern bzw. Achsen und Vergleichen der Ist-Schlupfwerte ($S_{ist,i}$) mit einem vorgegebenen Mindestschlupf ($S_{min}$), wenn die Ist-Bremskräfte ($F_{ist,i}$) kleiner als die Soll-Bremskräfte ($F_{soll,i}$) sind;
   f) Verknüpfen der Ist-Schlupfwerte ($s_{ist,i}$) einzelner Räder bzw. Achsen zu einem Summenschlupfsignal; und
   g) Auslösen einer Sicherheitsbremsung und/oder Abschalten einer bremskraftbegrenzenden bzw. bremskraftreduzierenden Einrichtung der Bremsanlage, wenn ein vorgegebener Soll-Schlupf nicht erreicht wird.

**2.** Verfahren nach Anspruch 1, **dadurch gekennzeichnet,** **daß** die Fahrzeuggeschwindigkeit (v) durch eine separate Meßeinrichtung ermittelt wird, die unabhängig von einer zur Steuerung bzw. Regelung von normalen Betriebsbremsungen vorgesehenen Geschwindigkeitsmeßeinrichtung ist.

**3.** Verfahren nach einem der Ansprüche 1 oder 2, **dadurch gekennzeichnet,** **daß** die Fahrzeuggeschwindigkeit durch ein Radarmeßsystem ermittelt wird.

**4.** Verfahren nach einem der Ansprüche 1 oder 2, **dadurch gekennzeichnet,** **daß** die Fahrzeuggeschwindigkeit durch Messen der Geschwindigkeit eines ungebremsten Rades bzw. einer ungebremsten Achse ermittelt wird.

**5.** Verfahren nach einem der Ansprüche 1 bis 4, **dadurch gekennzeichnet,** **daß** beim Vergleich der Ist-Verzögerung ($-b_{ist}$) mit der vorgegebenen Soll-Verzögerung ($-b_{soll}$) die Steigung bzw. das Gefälle der Fahrstrecke berücksichtigt wird.

**6.** Verfahren nach einem der Ansprüche 1 bis 5, **dadurch gekennzeichnet,** **daß** beim Vergleich der Radschlupfwerte ($S_i$) mit dem vorgegebenen Mindestschlupf ($S_{min}$) ein Zeitkriterium berücksichtigt wird.

**7.** Verfahren nach einem der Ansprüche 1 bis 6, **dadurch gekennzeichnet,** **daß** in Schritt g) ein Gleitschutzsystem des Fahrzeugs ganz oder teilweise abgeschaltet wird.

**8.** Verfahren nach einem der Ansprüche 1 bis 7, **dadurch gekennzeichnet,** **daß** die Ist-Bremskräfte ($F_{ist,i}$) gemessen werden.

**9.** Verfahren nach einem der Ansprüche 1 bis 7, **dadurch gekennzeichnet,** **daß** die Ist-Bremsräfte ($F_i$) aus Bremszylinderdrükken geschätzt werden.

**10.** Vorrichtung zur Wirkungsüberwachung von Bremsanlagen von Fahrzeugen, insbesondere von Schienenfahrzeugen, mit

a) Sensoren zur Sensierung der Fahrzeuggeschwindigkeit (v);
b) einer Einrichtung zur Ermittlung der Ist-Verzögerung ($-b_{ist}$) des Fahrzeugs aus der Fahrzeuggeschwindigkeit (v);
c) einem Komparator zum Vergleichen der Ist-Verzögerung ($-b_{ist}$) mit einer vom Fahrer geforderten Soll-Verzögerung ($-b_{soll}$); **gekennzeich-**

**net durch** :
d) Bremskraftsensoren zur Bestimmung der Ist-Bremskräfte ($F_{ist,i}$) an einzelnen Rädern bzw. Achsen;
e) einem Komparator, der die Ist-Bremskräfte ($F_{ist,i}$) mit zur Erreichung der Soll-Verzögerung ($-b_{soll}$) erforderlichen Soll-Bremskräfte ($F_{soll,i}$) vergleicht, wenn die Abweichung zwischen der Soll-Verzögerung ($-b_{soll}$) und der Ist-Verzögerung ($-b_{ist}$) einen vorgegebenen Toleranzwert überschreitet;
f) einer Einrichtung, die aus Radgeschwindigkeitssignalen ($v_i$) und der Fahrzeuggeschwindigkeit (v) Ist-Schlupfsignale ($s_i$) einzelner Räder bzw. Achsen ermittelt und mit einem vorgegebenen Mindestschlupf ($S_{min}$) vergleicht, wenn die Ist-Bremskräfte ($F_{ist,i}$) kleiner als die Soll-Bremskräfte ($F_{soll,i}$) sind;
g) einer Verknüpfungseinrichtung, die aus den Ist-Schlupfsignalen ($S_{ist,i}$) ein Summenschlupfsignal erzeugt; und
h) einer Einrichtung, die ein Signal zum Auslösen einer Sicherheitsbremsung und/oder zum Abschalten einer bremskraftbegrenzenden bzw. bremskraftreduzierenden Einrichtung der Bremsanlage erzeugt, wenn ein vorgegebener Soll-Schlupf nicht erreicht wird.

**Claims**

**1.** Method for monitoring the effectiveness of vehicle braking systems, particularly of rail vehicles, wherein the following steps are implemented in the event of a braking request by the driver:

a) determination of the vehicle speed (v);
b) ascertaining of the actual deceleration ($-b_{ist}$) of the vehicle from the vehicle speed (v) ;
c) comparison of the actual deceleration ($-b_{ist}$) with a target deceleration ($-b_{soll}$) required by the driver;
**characterised by** the further steps:
d) determination of actual brake power values ($F_{ist}$) on individual wheels or axles and comparison of the actual brake power values ($F_{ist}$) with target brake power values ($F_{soll}$) necessary in order to reach the target deceleration ($-b_{soll}$) if the difference between the target deceleration ($-b_{soll}$) and the actual deceleration ($-b_{ist}$) exceeds a predefined tolerance value;
e) ascertaining of actual slip values ($s_{ist,i}$) on individual wheels or axles and comparison of the actual slip values ($s_{ist,i}$) with a predefined minimum slip ($S_{min}$) if the actual brake power values ($F_{ist,i}$) are lower than the target brake power values ($F_{soll,i}$) ;
f) combining of the actual slip values ($S_{ist,i}$) of individual wheels or axles to form a total slip signal; and

g) triggering of a safety braking and / or disconnection of a brake power limiting or brake power reducing device of the braking system if a predefined target slip is not reached.

2. Method according to claim 1, **characterised in that** the vehicle speed (v) is ascertained by a separate measuring device which is independent of a speed measuring device provided for controlling or regulating braking during normal operation.

3. Method according to one of the claims 1 or 2, **characterised in that** the vehicle speed is ascertained by a radar measuring system.

4. Method according to one of the claims 1 or 2, **characterised in that** the vehicle speed is ascertained by measuring the speed of an unbraked wheel or an unbraked axle.

5. Method according to one of the claims 1 to 4, **characterised in that** the increase or the decrease in the distance covered is taken into consideration in the comparison of the actual deceleration ($-b_{ist}$) with the predefined target deceleration ($-b_{soll}$).

6. Method according to one of the claims 1 to 5, **characterised in that** a time criterion is taken into consideration in the comparison of the wheel slip values ($s_i$) with the predefined minimum slip ($S_{min}$).

7. Method according to one of the claims 1 to 6, **characterised in that** an anti-slip system of the vehicle is fully or partially disconnected in step g).

8. Method according to one of the claims 1 to 7, **characterised in that** the actual brake power values ($F_{ist,i}$) are measured.

9. Method according to one of the claims 1 to 7, **characterised in that** the actual brake power values ($F_i$) are estimated from brake cylinder pressures.

10. Device for monitoring the effectiveness of vehicle braking systems, particularly of rail vehicles, having:

a) sensors for sensing the vehicle speed (v);
b) a device for ascertaining the actual deceleration ($-b_{ist}$) of the vehicle from the vehicle speed (v);
c) a comparator for comparing the actual deceleration ($-b_{ist}$) with a target deceleration ($-b_{soll}$) required by the driver; **characterised by**:
d) brake power sensors for determining the actual brake power values ($F_{ist,i}$) on individual wheels or axles;

e) a comparator which compares the actual brake power values ($F_{ist,i}$) with target brake power values ($F_{soll,i}$ necessary in order to reach the target deceleration ($-b_{soll}$) if the difference between the target deceleration ($-b_{soll}$) and the actual deceleration ($-b_{ist}$) exceeds a predefined tolerance value;
f) a device which ascertains actual slip signals ($s_i$) of individual wheels or axles from wheel speed signals ($v_i$) and the vehicle speed (v) and compares them with a predefined minimum slip ($S_{min}$) if the actual brake power values ($F_{ist,i}$) are lower than the target brake power values ($F_{soll,i}$) ;
g) a combining device which generates a total slip signal from the actual slip signals ($S_{ist,i}$) ; and
h) a device which generates a signal for triggering safety braking and / or for disconnection of a brake power limiting or brake power reducing device of the braking system if a predefined target slip is not reached.

## Revendications

1. Procédé pour surveiller l'efficacité de systèmes de freinage de véhicules, en particulier de véhicules ferroviaires, dans lequel, lors d'une demande de freinage par le conducteur, les étapes suivantes sont effectuées :

a) définition de la vitesse du véhicule (v) ;
b) détermination de la décélération effective ($-b_{ist}$) du véhicule à partir de la vitesse du véhicule (v) ;
c) comparaison de la décélération effective ($-b_{ist}$) avec une décélération de consigne ($-b_{soll}$) demandée par le conducteur ; **caractérisé par** les autres étapes :
d) définition de forces de freinage effectives ($F_{ist}$) sur des roues ou essieux indépendants, et comparaison des forces de freinage effectives ($F_{ist}$) avec des forces de freinage de consigne ($F_{soll}$) qui sont nécessaires pour atteindre la décélération de consigne ($-b_{soll}$) si une différence entre la décélération de consigne ($-b_{soll}$) et la décélération effective ($-b_{ist}$) dépasse une valeur de tolérance prédéfinie ;
e) détermination de valeurs de patinage effectives ($s_{ist,i}$) sur des roues ou essieux indépendants, et comparaison des valeurs de patinage effectives ($s_{ist,i}$) avec un patinage minimal ($S_{min}$) prédéfini si les forces de freinage effectives ($F_{ist,i}$) sont plus petites que les forces de freinage de consigne ($F_{soll}$) ;
f) combinaison des valeurs de patinage effectives ($S_{ist,i}$) de roues ou d'essieux indépendants en un signal de patinage cumulé ; et

g) déclenchement d'un freinage de sécurité et/ou mise hors circuit d'un équipement du système de freinage limitant la force de freinage ou réduisant la force de freinage si un patinage de consigne prédéfini n'est pas atteint.

**2.** Procédé selon la revendication 1, **caractérisé en ce que**

la vitesse du véhicule (v) est déterminée par un équipement de mesure séparé, qui est indépendant d'un équipement de mesure de vitesse prévu pour la commande ou la régulation de freinages de service normaux.

**3.** Procédé selon une des revendications 1 ou 2, **caractérisé en ce que**

la vitesse du véhicule est déterminée par un système de mesure par radar.

**4.** Procédé selon une des revendications 1 ou 2, **caractérisé en ce que**

la vitesse du véhicule est déterminée par la mesure de la vitesse d'une roue non freinée ou d'un essieu non freiné.

**5.** Procédé selon une des revendications 1 à 4, **caractérisé en ce que**,

lors de la comparaison de la décélération effective ($-b_{ist}$) avec la décélération de consigne ($-b_{soll}$) prédéfinie, la pente montante ou la pente descendante du parcours de transport est prise en compte.

**6.** Procédé selon une des revendications 1 à 5, **caractérisé en ce que**,

lors de la comparaison des valeurs de patinage de roue ($s_i$) avec le patinage minimal ($S_{min}$) prédéfini, un critère de temps est pris en compte.

**7.** Procédé selon une des revendications 1 à 6, **caractérisé en ce que**,

dans l'étape g), un système anti-dérapant du véhicule est mis hors circuit totalement ou partiellement.

**8.** Procédé selon une des revendications 1 à 7, **caractérisé en ce que**

les forces de freinage effectives ($F_{ist,i}$) sont mesurées.

**9.** Procédé selon une des revendications 1 à 7, **caractérisé en ce que**

les forces de freinage effectives ($F_i$) sont estimées à partir de pressions de cylindre de frein.

**10.** Dispositif pour surveiller l'efficacité de systèmes de freinage de véhicules, en particulier de véhicules ferroviaires, avec

a) des capteurs pour capter la vitesse du véhicule (v) ;

b) un équipement pour déterminer la décélération effective ($-b_{ist}$) du véhicule à partir de la vitesse du véhicule (v) ;

c) un comparateur pour comparer la décélération effective ($-b_{ist}$) avec une décélération de consigne ($-b_{soll}$) demandée par le conducteur ;

**caractérisé par** :

d) des capteurs de force de freinage pour la définition des forces de freinage effectives ($F_{ist,i}$) sur des roues ou essieux indépendants ;

e) un comparateur qui compare les forces de freinage effectives ($F_{ist,i}$) avec des forces de freinage de consigne ($F_{soll,i}$) nécessaires pour atteindre la décélération de consigne ($-b_{soll}$) si la différence entre la décélération de consigne ($-b_{soll}$) et la décélération effective ($-b_{ist}$) dépasse une valeur de tolérance prédéfinie ;

f) un équipement qui, à partir de signaux de vitesse de roue ($v_i$) et de la vitesse du véhicule (v), détermine des signaux de patinage effectif ($s_i$) de roues ou essieux indépendants, et les compare avec un patinage minimal ($S_{min}$) prédéfini si les forces de freinage effectives ($F_{ist,i}$) sont plus petites que les forces de freinage de consigne ($F_{soll,i}$) ;

g) un équipement de combinaison qui produit un signal de patinage cumulé à partir des signaux de patinage effectif ($S_{ist,i}$) ; et

h) un équipement qui produit un signal pour déclencher un freinage de sécurité et/ou pour mettre hors circuit un équipement du système de freinage limitant la force de freinage ou réduisant la force de freinage si un patinage de consigne prédéfini n'est pas atteint.

```
┌─────────────────────┐
│ Brensanforderung    │───── 1
│ durch Fahrer?       │
├──────────┬──────────┤
│  NEIN    │   JA     │
└──────────┴──────────┘
                │
      2 ──┌─────────────────────┐
         │ Bestinnung der fahrzeug-│
         │ geschwindigkeit v      │
         └─────────────────────┘
  3                                        4
┌─────────────────────┐        ┌─────────────────────┐
│ Bestinnung der Ist- │        │ Bestinnung der Soll-│
│ Fahrzeugverzögerung -bist│    │ Fahrzeugverzögerung -bsoll│
└─────────────────────┘        └─────────────────────┘

      5 ──┌─────────────────────┐
      6 ──│ Vergleich           │
          │ Abweichung tolerierbar│
          ├──────────┬──────────┤
          │   JA     │   NEIN   │
          └──────────┴──────────┘

  7                                        
┌─────────────────────┐        ┌─────────────────────┐
│ Bestinnung von      │    B ──│ Bestinnung von      │
│ Ist-Brenskraften    │        │ Soll-Brenskraften   │
│ Fist               │        │ Fsoll               │
└─────────────────────┘        └─────────────────────┘

          ┌─────────────────────┐
          │ Fist. I )= Fsoll. I?│── 9
          ├──────────┬──────────┤
          │   JA     │   NEIN   │
          └──────────┴──────────┘

          ┌─────────────────────┐
          │ Bestinnung von Rad- │── 10
          │ bzw. Achsschlupfen  │
          │ Sist. I            │
          └─────────────────────┘

          ┌─────────────────────┐
          │ Vergleichen von Sist. I│── 11
          │ mit Smin           │
          └─────────────────────┘

          ┌─────────────────────┐
          │ Bilden eines Sunnen-│── 12
          │ schlupfsignals      │
          └─────────────────────┘

          ┌─────────────────────┐
          │ Vergleichen des     │── 13
          │ Sunnenschlupfsignals│
          │ mit Sollschlupf     │
          ├─────────────────────┤
          │ Abweichung tolerierbar?│── 14
          ├──────────┬──────────┤
          │   JA     │   NEIN   │
          └──────────┴──────────┘

  15                                       16
┌─────────────────────┐        ┌─────────────────────┐
│ Automatische        │        │ Abschalten der      │
│ Sicherheitsbrensung │        │ Gleitschutzanlage   │
└─────────────────────┘        └─────────────────────┘
```

Fig. 1

**EP 1 289 811 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19510755